# EUROPEAN PATENT SPECIFICATION

(11) **EP 3 117 050 B1**
(45) Date of publication and mention of the grant of the patent: **28.02.2018**
(21) Application number: 15718588.5
(22) Date of filing: 11.03.2015
(51) Int. Cl.: C08K 3/04, E04H 9/02, E04B 1/36, C08F 214/26, E01D 19/04

(54) **SLIDING BEARING FOR CONSTRUCTIONS**
GLEITLAGER FÜR BAUWERKE
PALIER LISSE POUR CONSTRUCTIONS

(30) Priority: 11.03.2014 IT MI20140379
(43) Date of publication of application: 18.01.2017
(73) Proprietor: Atlante S.r.l., 20010 Canegrate (MI) (IT)
(72) Inventor: BRENA, Mauro, I-21052 Busto Arsizio (VA) (IT)
(74) Representative: Spina, Alessandro
(86) International application number: PCT/IB2015/051764
(87) International publication number: WO 2015/136457

(56) References cited:
- EP-A1- 0 931 798
- WO-A1-2009/010487
- WO-A1-2012/114246
- JP-A- 2001 027 243
- US-A- 4 379 900
- US-A1- 2010 290 726

## Description

The present invention generally relates to supports for constructions and in particular to a sliding bearing for constructions such as bridges and buildings.

In the construction of civil and industrial buildings and road infrastructures such as bridges, road and rail viaducts, there are generally used sliding bearings which define between two or more parts of a structure slider or hinge constraints, as well as combinations thereof Sliding bearings serve to allow relative between the parts of a structure movements that are typically translations and/or rotations. In normal operating conditions, relative movements are caused by the weight of the construction, shrinkage of building materials, thermal actions, as well as by forces deriving from traffic, wind and the normal use of the construction. Movements can also occur in exceptional conditions such as in the case of seismic events.

A sliding bearing generally comprises at least a first component and a second component operatively connected to one another and configured to support a vertical or transverse load, as well as at least one pair of sliding surfaces arranged between the first and the second component so as to allow mutual movements and/or rotations thereof. A pair of flat surfaces is typically employed when it is necessary to allow mutual translation movements along one or a plurality of directions parallel to the surfaces. A pair of curved surfaces is instead used when it is necessary to allow mutual rotations about one or more axes.

One of the sliding surfaces is generally made of a metallic material and is applied to or integrally formed on one of the bearing components. This surface may for example be a mirror polished sheet of stainless steel having a thickness comprised between 1.5 and 3 mm, or a hard chrome coating.

The sliding surface associated with the other component of the bearing and arranged so as to achieve a sliding contact with the first metal surface is instead a sheet of polymeric material.

Bearings of this type are e.g. disclosed in the international publication WO 2012/114246 A1, which discloses the features of the preamble of claim 1.

The polymeric material surface of sliding bearings for buildings made in geographical areas having no or a modest seismicity, or more generally not intended to be used as anti-seismic supports with dissipative ability, is typically made of a polymeric material featuring a low coefficient of friction. The polymer material mainly used for these applications is polytetrafluoroethylene, PTFE, explicitly mentioned as preferred material by technical standards such as the European standard EN 1337-2 and the AASHTO LRFD standard Bridge Design Specifications. Specifically, the current edition of the European standard EN 1337-2 explicitly requires use of pure polytetrafluoroethylene sintered without recycled materials or fillers as sliding material, while the US standard AASHTO LRFD Bridge Design Specifications also allows use of pure PTFE comprising added carbon or glass fibers or other fillers that are chemically inert.

In addition to an exceptionally low coefficient of friction, by virtue of its particular chemical structure PTFE has other advantageous features such as a negligible hygroscopicity, a great chemical resistance and absence of oxidative phenomena, which make it exceptionally resistant to environmental agents and substantially immune to aging. As known from the scientific literature (see for example: CM Pooley and D. Tabor, "Friction and Molecular Structure: The Behaviour of Some Thermoplastics", in Proceedings of the Royal Society of London. Series A, Mathematical and Physical Sciences, Vol. 329, No. 1578, August 22, 1972, pp. 251-274), the exceptional sliding properties of PTFE are due to a transfer process of PTFE molecules that occurs when a first surface of PTFE slides on a second surface made of a different material, for example a metal surface. Since PTFE has a poor resistance to shear, generally lower than the adhesion forces that are generated between PTFE and the material of the second surface, a layer of PTFE molecules is detached and adheres to the second surface. The PTFE molecules thus transferred to the second surface are oriented along the sliding direction as a consequence of the relative sliding between the first and the second surfaces. Due to this process a thin layer of highly oriented molecules of PTFE is formed on the second surface (in the present example the metal surface), the first surface of PTFE actually sliding on this second surface and thus achieving a sliding resistance that is remarkably lower than the sliding resistance that would characterize PTFE and the metal material of the second surface. In particular, it is known that the process of detachment and transfer of PTFE molecules from a first PTFE surface to a second surface in sliding contact with the first one is facilitated by the low resistance to shear stress of PTFE, while the capacity of PTFE molecules to be aligned along the sliding direction is facilitated by the high plasticity of the polymer.

The standards in the field also prescribe as preferred the use of a lubricant between the two sliding surfaces of a bearing, such as a silicone-based grease, in order to further reduce the coefficient of friction.

Although PTFE is the polymeric material mostly used for the construction of the sliding surface of sliding bearings for constructions, it is known that it has a poor resistance to compression and a high tendency to creep under certain load conditions, which limits the loading capacity of the bearings employing PTFE sliding surfaces.

It is also known that the compressive strength of PTFE is further reduced when temperature increases, and in fact the technical standards described above, in particular the standard EN 1337-2, limit use of PTFE to bearings whose environmental service temperatures do not exceed 48°C.

The technical standards also limit the use of PTFE even at low temperatures, and in particular restrict its use to supports to be installed in environments wherein environmental service temperatures are not lower than -35°C. At these temperatures, in fact, PTFE features a greater rigidity, a reduction of its plasticity and an increase in shear resistance, which contrast and may even prevent transfer and formation of a layer of PTFE molecules on the sliding metal surface of a bearing, thus leading to an unacceptable increase in the coefficient of friction and therefore in the resistance the bearing creates against the relative movements of the construction. Furthermore, the increase in the coefficient of friction causes an increase in abrasion stresses and thus a higher wear of the sliding surfaces.

For applications at temperatures higher than 48°C or lower than -35°C the technical standards only allow use of elastomeric bearings or rolling metal bearings, which are generally more cumbersome than sliding bearings and more prone to aging or deterioration phenomena caused by atmospheric agents.

Concerning the limits established by the technical standards for bearings intended to operate at temperatures higher than 48°C, there have been recently proposed alternatives to the use of PTFE, such as use of ultra-high molecular weight polyethylene (UHMWPE) and of cast polyamide added with lubricants in the solid state, which are described in patent EP 1523598 and in patent EP 2179189, respectively.

Polyethylene is a polymer material also suitable for applications at temperatures lower than -35°C. However, it is more prone to oxidation and aging than PTFE. Polyamide has a higher coefficient of friction than PTFE, and is also a highly hygroscopic material, therefore, much less suitable than PTFE to be exposed to atmospheric agents and moist environments. Furthermore, when compared to PTFE polyamide becomes stiffer at low temperatures and features a more remarkable loss of viscoelastic properties, hence it is not suitable for use at low temperatures.

There is therefore a need to find effective alternatives for making the surfaces of sliding bearings for constructions intended for applications at low temperatures, in particular below -35°C, which is an object of the present invention.

It is also an object of the present invention to provide a sliding bearing wherein the polymeric sliding surface can operate at temperatures down to -50°C, thus allowing to overcome the limits of use currently established by the technical standards in the field.

Said object is achieved with a sliding bearing according to claim 1 and by the use of a modified polytetrafluoroethilene according to claim 8.

An idea of solution underlying the present invention is to make the polymeric sliding surface or surfaces of a sliding bearing by using a semi-finished product, such as a plate, made of PTFE modified with perfluoropropylvinylether, PPVE, in percentages ranging between 0.1% and 0.3% by weight.

PPVE acts as a modifying agent of PTFE partially counteracting the formation of the crystalline phase and also promoting a better distribution of the crystallites within the amorphous phase, which results in polymer matrices having a relatively low resistance to shear stress, a greater plasticity and a reduced number of porosities, i.e. matrices having an increased density when compared to pure PTFE, which enhances the mechanical properties of the material.

The material used to make the polymeric sliding surface is a homopolymer of PTFE and thus substantially features the same properties in terms of exceptional resistance to chemical and atmospheric agents, substantially life-long resistance to oxidation and exceptionally low coefficient of friction.

This material is known *per se* in the field for its properties of heat stability and is described in the US Patent 4379900.

However, the inventor has experimentally found that this material has additional properties and in particular that, unlike the pure PTFE required by technical standards, thanks to the presence of PPVE, that modifies the ratio between the amorphous phase and the crystalline phase in the polymer matrix, the coefficient of friction of PTFE modified by addition of PPVE remains substantially the same even at low temperatures. The coefficient of friction features a particularly small increase at a temperature of - 35°C or lower down to -50°C. This is exploited by the present invention so as to make sliding bearings suitable to operate even at these temperatures, and thus effectively overcoming the limitations currently imposed by the above mentioned technical standards.

Thanks to a particularly compact polymer matrix the PTFE modified by addition of PPVE also features a lower creep compared to pure PTFE, which reduces the occurrence of the well-known creep and cold flow phenomena that limit application of sliding bearings at specific load conditions and temperatures ranges between -35°C and +48°C. It is believed that due to these features, the material is also suitable for applications at temperatures above +48°C, thus extending application of sliding bearings even at temperatures beyond the current limits of the standards.

PTFE modified by addition of PPVE may also advantageously comprise added organic or inorganic fillers whose main function is to increase the coefficient of friction of the base material so as to allow its application in bearings of the sliding pendulum type, where the sliding surfaces have a dissipative action.

Further features and advantages of the sliding bearing according to the present invention will be clear from the following description of embodiments thereof, with reference to the following figures wherein:
- Figure 1 is a front, partially sectional view schematically showing a sliding bearing according to the invention of flat, multidirectional type;
- Figure 2 is a graph showing a comparison at different temperatures between the values of the friction coefficient of pure PTFE and of PTFE modified with PPVE in percentages ranging between 0.1% and 0.3% by weight;
- Figure 3 is a graph showing a comparison at different temperatures between the values of the friction coefficient of PTFE modified with PPVE in percentages ranging between 0.1% and 0.3% by weight, wherein PTFE modified with PPVE in percentages ranging between 0.1% and 0.3% by weight is lubricated with a silicone grease according to EN 1337-2, and the requirements about the maximum friction coefficient of pure and lubricated PTFE according to the standard EN 1337-2 at temperatures of - 35°C and +21°C;
- Figure 4 is a front, partially sectional view schematically showing a sliding bearing according to the invention of a combined multidirectional flat and spherical type; and
- Figure 5 is a front, partially sectional view schematically showing a sliding bearing according to the invention of a sliding pendulum type.

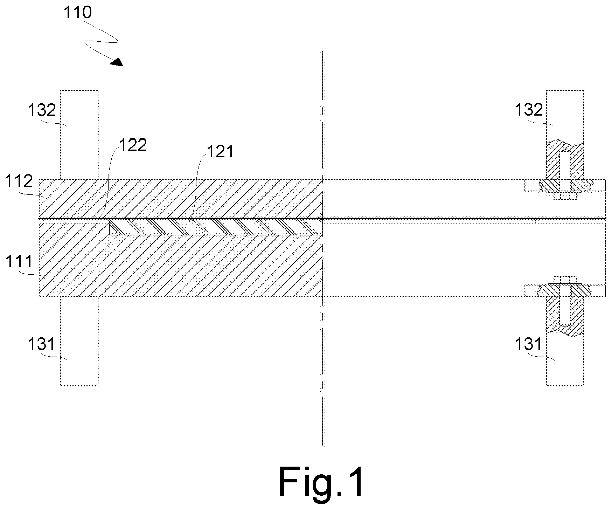

With reference to Figure 1, a sliding bearing according to the invention is generally indicated by reference numeral 110. The sliding bearing 110 comprises a first and a second components 111, 112 operatively connected to one another and configured to withstand a vertical load.

The first component 111 is intended to be connected to a support structure, for example a stack of a bridge or the foundation of a building or an industrial plant, and the second component is configured to be connected to an element intended to be placed on said support structure, for example a beam of a bridge deck or of a building or industrial plant. In the illustrated embodiment, connection of the bearing components to the support structure to the element is for example made by way of special feet or columns 131, 132 intended to be fitted and fixed in holes formed in these parts.

The bearing 110 further comprises at least one pair of sliding surfaces arranged between the first and the second components so as to allow relative translations thereof.

In the illustrated embodiment, the sliding bearing 110 e.g. comprises a single pair of sliding surfaces that are respectively indicated by reference numbers 121, 122.

The sliding surfaces 121, 122 are for example flat surfaces configured to allow translations between the first and the second components 111, 112 along a plurality of directions parallel to their contact plane. In an operating configuration, the contact plane is typically a horizontal plane.

One of the sliding surfaces, e.g. surface 121 in the illustrated embodiment, is a plate made of a polymeric material. The plate may e.g. be fitted in a seat formed in the first component 111 as schematically shown in figure 1, but it could simply be placed on the first component 111 and fixed thereto by way of an adhesive. The other sliding surface, e.g. surface 122 in the illustrated embodiment, is a metal surface applied to or integrally formed on the second component 112.

According to the present invention, the polymeric material sliding surface is made of polytetrafluoroethylene (PTFE) modified with perfluoropropylvinylether (PPVE) in percentages ranging between 0.1% and 0.3% by weight.

This material is a homopolymer of PTFE whose main physic-mechanical properties, verified experimentally, are listed in Table 1 below.

| **Property** | **Method** | **Unit** | **Value** |
|---|---|---|---|
| Average apparent density | EN ISO 60 | g/dm³ | 400 ± 50 |
| Average particle size | ISO 13320 | µm | < 50 |
| Density | EN ISO 1183 | kg/dm³ | da 2,140 a 2,180 |
| Yield stress | EN ISO 527 | MPa | > 35 |
| Elongation at break | EN ISO 527 | % | > 500 |
| Porosity | FT-IR (Fourier transform infrared spectroscopy) | % | < 0,50 |

The material described above has the functional properties typical of fluoropolymer resins in terms of resistance to oxidation and aging, chemical inertness, resistance at high temperature, toughness, flexibility, exceptionally low coefficient of friction, absence of hygroscopicity and excellent resistance to environmental factors.

The addition of PPVE as modifying agent in the percentages mentioned above provides the fluoropolymer resin with special properties, some of which, such as weldability, impermeability to gases and liquids and low porosity, are already known in the art and are currently being exploited in the manufacture of gaskets and seats for spherical valves, non-stick coatings and components with complex geometric shapes that may be advantageously made by way of welding, for example, fittings and transport systems for industrial fluids for applications in the chemical, pharmaceutical and electronic field.

The inventor has however found that, compared to pure PTFE, the use of PTFE modified with PPVE in the above weight percentages allows to obtain remarkably lower values of the friction coefficient and a higher wear resistance at low temperatures and in particular at temperatures lower than -35°C down to -50°C. Thanks to these characteristics, it is therefore possible to make sliding surfaces suitable for applications at extremely low environmental temperatures, which allows application of sliding bearings for constructions beyond the limits established by the current technical standards.

According to the standard EN 1337-2, the value of the friction coefficient of PTFE depends on the operation conditions, and in particular on contact pressure, sliding speed, total length of the sliding path and operation temperature. Tests of suitability of use are prescribed wherein three of the four parameters, namely contact pressure, sliding speed and total length of the sliding path are fixed, while temperature is made to vary within an operative range of -35°C to +35°C.

Samples of PTFE modified with PPVE in percentages ranging between 0.1% and 0.3% by weight were subjected to an intense campaign of experimental tests carried out according to the methods specified in the European Standard EN 1337 Part 2, 2004 edition, which is presently in force, integrated according to the content of this disclosure. The tests showed the following results, which are proposed here comparison with the performance of pure PTFE as required by the applicable technical standards.

In tests for suitability for use according to the European standard EN 1337 Part 2, and on equal values of contact pressure, sliding speed and total length of sliding path the PTFE modified with PPVE in percentages ranging between 0.1% and 0.3% by weight features values of the friction coefficient that are at least one third lower than the corresponding values shown by pure PTFE, tested and verified in accordance with EN 1337-2: 2004, for every temperature in the range of operating temperatures from -35°C to +35°C.

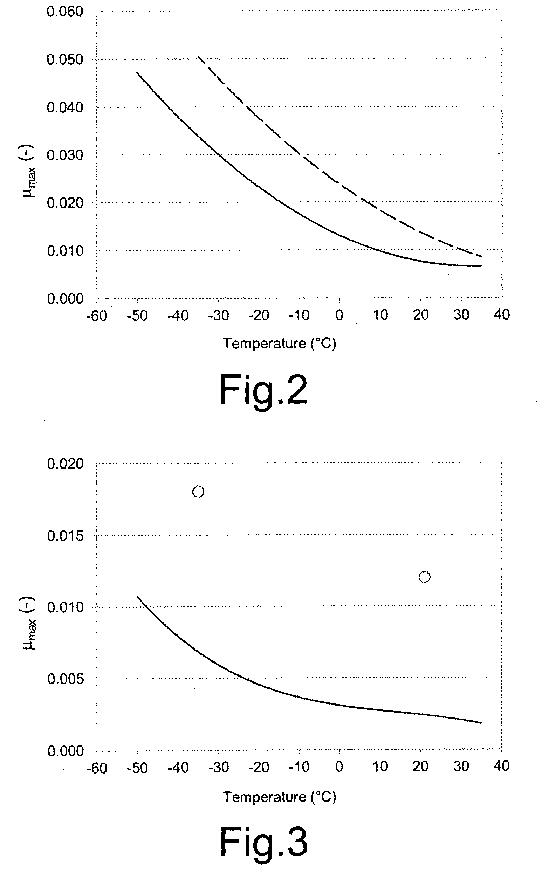

Figure 2 is a graph showing a comparison between the experimental values of the coefficient of friction of pure PTFE (dashed line) and of PTFE modified with PPVE in percentages ranging between 0.1% and 0.3% by weight (solid line) as temperature changes, wherein both materials were tested in the absence of lubrication. As it may be seen, PTFE modified with PPVE shows a trend of the friction coefficient constantly lower than that of pure PTFE, in particular at low temperatures between -35°C and - 50°C, which defined the range of interest in the frame of the present invention.

The coefficient of friction of PTFE modified with PPVE in percentages ranging between 0.1% and 0.3% by weight is lower than that of pure PTFE measured at -35°C. It has also been tested and verified that thanks to the particularly compact polymer matrix, PTFE modified with PPVE in percentages ranging between 0.1% and 0.3% by weight can withstanding contact pressures that are at least 50% higher than those required by the standards of the industry to the PTFE.

Further tests of suitability for use in accordance with EN 1337-2 were also carried out by keeping the sliding speed and the total length of the sliding path constant and corresponding to the values prescribed by this standard. In these further tests the value of contact pressure was at least twice the test value prescribed for pure PTFE. These tests have shown that at temperatures of -50°C PTFE modified with PPVE in percentages ranging between 0.1% and 0.3% by weight has values of the coefficient of friction lower than the corresponding values of pure PTFE tested and verified in accordance with EN 1337-2, at a temperature of -35°C.

Figure 3 is a graph showing the values of the coefficient of friction of PTFE modified with PPVE in percentages ranging between 0.1% and 0.3% by weight (solid line) at different temperatures, where the material is lubricated with a silicone grease according to EN 1337-2, compared with the requirements about the maximum friction coefficient for pure and lubricated PTFE established by the standard EN 1337-2 between -35°C and +21°C. These two values of the friction coefficient are shown in figure 3 by way of respective circles. As it may be seen, the PTFE modified with PPVE features at these two temperatures a value of the maximum coefficient of friction consistently lower than the limit set by the standard. At a temperature of -50°C this material features a maximum friction coefficient that is lower than the standard limit at the minimum operating temperature for the pure PTFE of -35°C.

In light of these experimental results it will be understood that use of PTFE modified with PPVE is therefore possible in sliding bearings for constructions intended to be installed in geographical areas characterized by operating temperatures lower than 0°C, seasonally or for longer periods, as well as in geographical areas characterized by operating temperatures lower than -35°C down to -50°C for remarkably long periods.

It will be understood that for the purposes of the present invention it is completely immaterial that the polymeric material sliding surface 121 is associated to one between the first and the second components and that the metal sliding surface 122 is applied to or formed on a portion or the whole face of the other component. In an entirely equivalent way, the polymeric material sliding surface 121 might be associated to the second component 112 and the metal sliding surface 122 might be associated with a portion or the whole face of the first component 111.

The assembly or anchoring mode of the polymeric material plate 121 on the first or second components is also completely irrelevant for the purposes of the invention.

It will also be understood that the present invention is not even limited to bearings of a multidirectional flat type, but may be advantageously used also in bearings of a unidirectional type that in addition to the sliding surfaces described above also comprise central and/or lateral guides on which further sliding surfaces configured to withstand lateral forces are arranged. The sliding surfaces of the polymeric material guides may be advantageously be made of PTFE modified with the addition of PPVE in percentages ranging between 0.1% and 0.3% by weight.

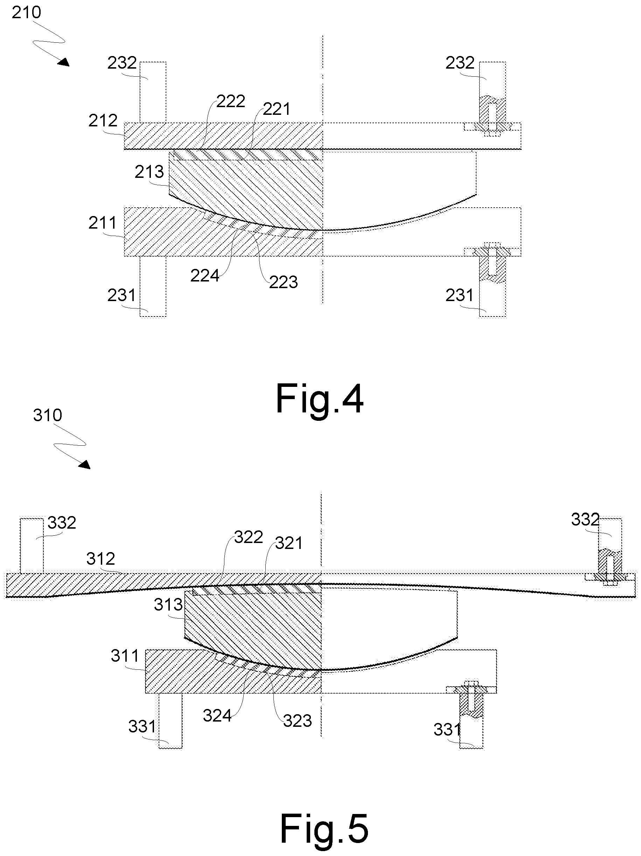

The invention is also applicable to bearings with curved surfaces, for example to spherical type bearings, and bearings combining a unidirectional or multidirectional flat type bearing with a spherical bearing such as that shown in Figure 4.

Similarly to the bearing shown in Figure 1, also in this case the bearing 210 includes a first component 211 adapted to be connected to a support structure, for example the pile of a bridge, and a second component 212 adapted to be connected to an element intended to be placed on said support structure, for example a beam of the deck of the bridge. Moreover, as in the bearing of Figure 1, the connection to the support structure and the element is achieved by way of special feet or columns 231, 232 intended to be fitted and fixed in holes formed in these parts.

The bearing 210 further comprises a third component 213 arranged between the first component 211 and the second component 212.

The surface of the third component 213 facing the first component 211 is convex and is configured to contact a corresponding concave surface formed in the first component 211.

The surface of the third component 213 facing the second component 212 is flat and is configured to contact a corresponding flat surface of the second component 212.

The sliding bearing shown in Figure 4 comprises two pairs of sliding surfaces respectively indicated by reference numbers 221, 222 and 223, 224 and arranged one between the first and the third components and the other between the second and the third components. For each pair of surfaces, one sliding surface is a plate of polymeric material mounted on one between the first and third or the second and the third components of the bearing, while the other one is associated with at least a portion of the face of the other component facing the polymeric material plate. The polymeric material plate is made of PTFE modified with PPVE in percentages ranging between 0.1% and 0.3% by weight.

The sliding surfaces 221, 222 are of the flat type and are respectively formed of a polymeric material plate fitted in a seat formed in the third component 213, and e.g. of a stainless steel sheet applied to the face of the second component 212. The sliding surfaces 223, 224 are curved, spherical or cylindrical surfaces, respectively formed of a polymeric material plate fitted in a concave seat formed in the first component 211, and e.g. of a stainless steel sheet applied to the convex face of the third component 213.

The PTFE modified with PPVE in weight percentages described above may also be advantageously used to make the sliding polymeric surface in bearings of the sliding pendulum type, which serve as anti-seismic supports for bridges, buildings and industrial plants.

Referring to Figure 5, as in the previous examples the bearing 310 comprises a first component 311 adapted to be connected to a support structure, for example a pile of a bridge, and a second component 312 adapted to be connected to an element intended to be placed on the support structure, for example a beam of the deck of the bridge.

Moreover, as in the previous examples, the connection to the support structure and the element is made by way of special feet or columns 331, 332 intended to be fitted and fixed in holes formed in these parts.

The bearing 310 further comprises a third component 313 arranged between the first component 311 and the second component 312. The face of the third component 313 facing the first component 311 is convex and is intended to contact a corresponding concave surface of the first component 311. The face of the third component 313 facing the second component 312 is also convex and is intended to contact a corresponding concave surface of the second component 312.

The bearing 310 comprises two pairs of sliding surfaces indicated with reference numbers 321, 322 and 323, 324, respectively, and arranged one between the first and the third components and the other one between the second and the third components. For each pair of sliding surfaces, one sliding surface is a plate of PTFE modified with PPVE in percentages ranging between 0.1% and 0.3% by weight mounted on one of the first and third or the second and the third components of the bearing, while the other one is associated with at least a portion of the face of the other component facing the polymeric material plate.

The sliding surfaces 321, 322 are curved, spherical or cylindrical surfaces and are respectively formed of a plate of polymeric material fitted in a seat formed in the third component 313, and e.g. of a stainless steel sheet applied to the face of the second component 312. Also the sliding surfaces 323, 324 are curved, spherical or cylindrical surfaces, respectively formed of a polymeric material plate fitted in a concave seat formed in the first component 311, and e.g. of a stainless steel sheet applied to the convex face of the third component 313.

It is known that due to the sliding of the concave surfaces on the convex surfaces this type of bearings allow an overlying structure to oscillate increasing and decreasing its potential energy according to the laws of motion of a pendulum, whose natural period is determined by the radius of curvature of the concave surfaces. The radius of curvature of the concave surfaces is designed so as to optimize the natural period of the pendulum in order to reduce the seismic response of the overlying structure. A certain amount of kinetic energy is dissipated thanks to the coefficient of friction that characterizes the sliding surfaces, thus further reducing the seismic response of the overlying structure.

Due to friction, kinetic energy is transformed into thermal energy that must be transferred in the form of heat as efficiently as possible through the components of the bearing. Similarly to PTFE, also the homopolymer of PTFE modified with PPVE generally has a low heat transfer coefficient, for example in the order 0.20 - 0.25 W/(m·K).

According to a further aspect of the invention, in view of the application to sliding bearings of the pendulum type, the homopolymer of PTFE modified with PPVE may advantageously comprise added organic and/or inorganic fillers suitable to increase the friction coefficient up to e.g. ranging between 5% and 8% so as to achieve an adequate braking action that allows to effectively dissipate the kinetic energy which is generated as a consequence of a seismic event.

The organic fillers may for example be carbon or graphite fibers in an amount ranging between 5% and 30% by weight.

The inorganic fillers may for example be metal e.g. bronze particles in percentages ranging between 10% and 30% by weight.

The use of either organic fillers in the form of graphite or of inorganic or metallic particles is particularly advantageous because it allows not only to increase the coefficient of friction so as to generate an adequate braking action, but also to increase the heat transfer coefficient of the polymeric material, thus promoting transfer of thermal energy in the form of heat.

The present invention has been described with reference to preferred embodiments thereof. It is understood that there may be other embodiments relating to the same inventive idea, as defined by the scope of protection of the claims set forth below.

## Claims

1. A sliding bearing (110, 210; 310) for constructions, said bearing (110; 210; 310) comprising at least one first and one second components (111; 112; 211, 212, 213; 311, 312, 313) operably connected to one another and configured to withstand a vertical or transverse load, as well as at least one pair of sliding surfaces (121, 122; 221, 222, 223, 224; 321, 322, 323, 324) arranged between said first and second components so as to allow mutual movements and/or rotations thereof, wherein one of the sliding surfaces (121; 221, 223; 321, 323) of the pair of sliding surfaces is a plate made of a polymeric material mounted on one between the first and second components and the other sliding surface (122; 222, 224; 322, 324) is a metal surface associated to at least a portion of the face of the other member facing the polymeric material plate, wherein said polymeric material is polytetrafluoroethylene (PTFE), **characterized in that** said polytetrafluoroethylene (PTFE) is modified by addition of perfluoropropylvinylether (PPVE) in percentages ranging between 0.1% and 0.3% by weight.

2. A sliding bearing (110; 210; 310) according to claim 1, wherein said polymeric material further comprises organic and/or inorganic fillers.

3. A sliding bearing (110; 210; 310) according to claim 2, wherein said organic fillers are carbon fibers in percentages ranging between 5 % and 30% by weight.

4. A sliding bearing (110; 210; 310) according to claim 2, wherein said organic fillers are in the form of graphite in percentages ranging between 5 % and 30% by weight.

5. A sliding bearing (110; 210; 310) according to claim 2, wherein said inorganic fillers are metal particles in percentages ranging between 10% and 30% by weight.

6. A sliding bearing (110; 210; 310) according to claim 5, wherein said metal particles are bronze particles.

7. A sliding bearing (110; 210; 310) according to any one of claims 1 to 6, wherein said polymeric material plate comprises a plurality of dimples configured to receive a lubricant.

8. Use of polytetrafluoroethylene (PTFE) modified by addition of perfluoropropylvinylether (PPVE) in percentages ranging between 0.1% and 0.3% by weight as sliding material in the form of plates in a sliding bearing for constructions according to claim 1.

9. Use of polytetrafluoroethylene (PTFE) modified by addition of perfluoropropylvinylether (PPVE) in percentages ranging between 0.1% and 0.3% by weight according to claim 8, wherein said polymeric material also comprises organic and/or inorganic fillers.

10. Use of polytetrafluoroethylene (PTFE) modified by addition of perfluoropropylvinylether (PPVE) in percentages ranging between 0.1% and 0.3% by weight according to claim 9, wherein said organic fillers are carbon fibers in percentages ranging between 5 % and 30% by weight.

11. Use of polytetrafluoroethylene (PTFE) modified by addition of perfluoropropylvinylether (PPVE) in percentages ranging between 0.1% and 0.3% by weight according to claim 9, wherein said organic fillers are in the form of graphite in percentages ranging between 5 % and 30% by weight.

12. Use of polytetrafluoroethylene (PTFE) modified by addition of perfluoropropylvinylether (PPVE) in percentages ranging between 0.1% and 0.3% by weight according to claim 9, wherein said inorganic fillers are metal particles in percentages ranging between 10% and 30% by weight.

13. Use of polytetrafluoroethylene (PTFE) modified by addition of perfluoropropylvinylether (PPVE) in percentages ranging between 0.1% and 0.3% by weight according to claim 12, wherein said inorganic fillers are metal particles in percentages ranging between 10% and 30% by weight.

14. Use of polytetrafluoroethylene (PTFE) modified by addition of perfluoropropylvinylether (PPVE) in percentages ranging between 0.1% and 0.3% by weight according to claim 13, wherein said metal particles are bronze particles.

## Patentansprüche

1. Ein Gleitlager (110; 210; 310) für Bauwerke, wobei das besagte Gleitlager (110; 210; 310) wenigstens eine erste und eine zweite Komponente (111; 112; 211, 212, 213; 311, 312, 313) aufweist, welche wirkungstechnisch miteinander gekoppelt sowie derart ausgelegt sind, dass sie einer Vertikalbelastung oder einer Querbelastung widerstehen, sowie wenigstens ein Paar von Gleitflächen (121, 122; 221, 222, 223, 224; 321, 323), welche zwischen den besagten, ersten und zweiten Komponenten angeordnet sind, um deren gegenseitige Bewegungen und/oder Rotationen zu ermöglichen, wobei eine der Gleitflächen (121; 221, 223; 321, 323) des Gleitflächenpaares eine Platte aus einem Polymerwerkstoff ist, die an einer von den ersten und den zweiten Komponenten befestigt ist, und wobei die andere Gleitfläche (122; 222, 224; 322, 324) eine metallische Oberfläche ist, die wenigstens einem Bereich der Stirnfläche des anderen Elements zugeordnet ist, welcher der Platte aus Polymerwerkstoff zugewandt ist, wobei der besagte Polymerwerkstoff Polytetrafluorethylen (PTFE) ist, **dadurch gekennzeichnet, dass** das besagte Polytetrafluorethylen (PTFE) durch Zugabe von Perfluorpropylvinylether (PPVE) in einem Prozentbereich zwischen 0,1 und 0,3 Gew.-% modifiziert ist.

2. Ein Gleitlager (110; 210; 310) nach Anspruch 1, wobei der besagte Polymerwerkstoff ferner organische und/oder anorganische Füllstoffe enthält.

3. Ein Gleitlager (110; 210; 310) nach Anspruch 2, wobei die besagten, organischen Füllstoffe Kohlenstofffasern in einem Prozentbereich zwischen 5 und 30 Gew.-% sind.

4. Ein Gleitlager (110; 210; 310) nach Anspruch 2, wobei die besagten, organischen Füllstoffe in Form von Graphit in einem Prozentbereich zwischen 5 und 30 Gew.-% sind.

5. Ein Gleitlager (110; 210; 310) nach Anspruch 2, wobei die besagten, anorganischen Füllstoffe Metallpartikel in einem Prozentbereich zwischen 10 und 30 Gew.-% sind.

6. Ein Gleitlager (110; 210; 310) nach Anspruch 5, wobei die besagten Metallpartikel Bronzepartikel sind.

7. Ein Gleitlager (110; 210; 310) nach einem der Ansprüche 1 bis 6, wobei die besagte Platte aus Polymerwerkstoff eine Vielzahl von Vertiefungen zur Aufnahme von Schmiermittel aufweist.

8. Verwendung von Polytetrafluorethylen (PTFE), das durch Zugabe von Perfluorpropylvinylether (PPVE) in einem Prozentbereich zwischen 0,1 und 0,3 Gew.-% modifiziert ist, als Gleitwerkstoff in Form von Platten in einem Gleitlager für Bauwerke nach Anspruch 1.

9. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 8 modifiziert ist, wobei der besagte Polymerwerkstoff zusätzlich organische und/oder anorganische Füllstoffe enthält.

10. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 9 modifiziert ist, wobei die besagten, organischen Füllstoffe Kohlenstofffasern in einem Prozentbereich zwischen 5 und 30 Gew.-% sind.

11. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 9 modifiziert ist, wobei die besagten, organische Füllstoffe in Form von Graphit in einem Prozentbereich zwischen 5 bis 30 Gew.-% sind.

12. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 9 modifiziert ist, wobei die besagten, anorganische Füllstoffe Metallpartikel in einem Prozentbereich von 10 bis 30 Gew.-% sind.

13. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 12 modifiziert ist, wobei die besagten, anorganischen Füllstoffe Metallpartikel in einem Prozentbereich von 10 bis 30 Gew.-% sind.

14. Verwendung von Polytetrafluorethylen (PTFE), das durch Zugabe von Perfluorpropylvinylether (PPVE) in einem Prozentbereich zwischen 0,1 und 0,3 Gew.-% nach Anspruch 13 modifiziert ist, wobei die besagten Metallpartikel Bronzepartikel sind.

## Revendications

1. Palier lisse (110, 210 ; 310) pour constructions, ledit palier (110 ; 210 ; 310) comprenant au moins un premier et un deuxième composants (111; 112; 211, 212, 213; 311, 312, 313) connectés de manière opérationnelle l'un à l'autre et configurés pour supporter une charge verticale ou transversale, ainsi qu'au moins une paire de surfaces de glissement (121, 122; 221, 222, 223, 224; 321, 322, 323, 324) agencées entre lesdits premier et deuxième composants de façon à permettre des rotations et/ou mouvement mutuels de ceux-ci, dans lequel l'une des surfaces de glissement (121 ; 221, 223 ; 321, 323) de la paire de surfaces de glissement est une plaque faite en un matériau polymère monté sur l'un parmi les premier et deuxième composants et l'autre surface de glissement (122 ; 222, 224 ; 322, 324) est une surface métallique associée à au moins une partie de la face de l'autre membre faisant face à la plaque de matériau polymère, dans lequel ledit matériau polymère est le polytétrafluoroéthylène (PTFE), **caractérisé en ce que** ledit polytétrafluoroéthylène (PTFE) est modifié par addition de perfluoropropylvinyléther (PPVE) à des pourcentages situés dans la plage comprise entre 0,1 % et 0,3 % en poids.

2. Palier lisse (110; 210; 310) selon la revendication 1, dans lequel ledit matériau polymère comprend en outre des charges organiques et/ou inorganiques.

3. Palier lisse (110; 210; 310) selon la revendication 2, dans lequel lesdites charges organiques sont des fibres de carbone à des pourcentages situés dans la plage comprise entre 5 % et 30 % en poids.

4. Palier lisse (110; 210; 310) selon la revendication 2, dans lequel lesdites charges organiques sont sous la forme de graphite à des pourcentages situés dans la plage comprise entre 5 % et 30 % en poids.

5. Palier lisse (110; 210; 310) selon la revendication 2, dans lequel lesdites charges inorganiques sont des particules métalliques à des pourcentages situés dans la plage comprise entre 10 % et 30 % en poids.

6. Palier lisse (110; 210; 310) selon la revendication 5, dans lequel lesdites particules métalliques sont des particules de bronze.

7. Palier lisse (110 ; 210 ; 310) selon l'une quelconque des revendications 1 à 6, dans lequel ladite plaque de matériau polymère comprend une pluralité de cavités configurées pour recevoir un lubrifiant.

8. Utilisation de polytétrafluoroéthylène (PTFE) modifié par addition de perfluoropropylvinyléther (PPVE) à des pourcentages situés dans la plage comprise entre 0,1 % et 0,3 % en poids en tant que matériau de glissement sous la forme de plaques dans un palier lisse pour constructions selon la revendication 1.

9. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 8, dans laquelle ledit matériau polymère comprend aussi des charges organiques et/ou inorganiques.

10. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 9, dans laquelle lesdites charges organiques sont des fibres de carbone à des pourcentages situés dans la plage comprise entre 5 % et 30 % en poids.

11. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 9, dans laquelle lesdites charges organiques sont sous la forme de graphite à des pourcentages situés dans la plage comprise entre 5 % et 30 % en poids.

12. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 9, dans laquelle lesdites charges inorganiques sont des particules métalliques à des pourcentages situés dans la plage comprise entre 10 % et 30 % en poids.

13. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 12, dans laquelle lesdites charges inorganiques sont des particules métalliques à des pourcentages situés dans la plage comprise entre 10 % et 30 % en poids.

14. Utilisation de polytétrafluoroéthylène (PTFE) modifié par addition de perfluoropropylvinyléther (PPVE) à des pourcentages situés dans la plage comprise entre 0,1 % et 0,3 % en poids selon la revendication 13, dans laquelle lesdites particules métalliques sont des particules de bronze.
